Europäisches Patentamt

European Patent Office

Office européen des brevets

(19)

(11) Publication number: **0 324 072 B1**

# EUROPEAN PATENT SPECIFICATION

(12)

(45) Date of publication of patent specification: **11.03.92**

(51) Int. Cl.⁵: **A23G 3/00**, A23F 5/38, A23F 5/24

(21) Application number: **88118355.2**

(22) Date of filing: **04.11.88**

(54) Beverage capsules.

(30) Priority: **10.12.87 US 131205**

(43) Date of publication of application:
**19.07.89 Bulletin 89/29**

(45) Publication of the grant of the patent:
**11.03.92 Bulletin 92/11**

(84) Designated Contracting States:
**AT BE CH DE FR GB GR IT LI LU NL SE**

(56) References cited:
WO-A-00/2636        BE-A- 514 268
DE-A- 3 008 836     FR-A- 1 265 224
FR-A- 1 600 708     FR-A- 2 083 304
FR-A- 2 108 343     US-A- 2 851 365
US-A- 3 869 555     US-A- 4 614 658

"Carop as a substitute or extender for cocoa", W. A. Meer, The Manufact. Confectioner, March 1979

" Cacoa powder alternatives, some experiences from practice " A. C. Woorden

(73) Proprietor: **SOCIETE DES PRODUITS NESTLE S.A.**
**Case postale 353**
**CH-1800 Vevey(CH)**

(72) Inventor: **Destephen, Stephen J.**
**215 Liberty Street South**
**Oswego, N.Y. 13126(US)**
Inventor: **Fischbach, Eugene R.**
**7221/2 West Third Street**
**Fulton, N.Y. 13069(US)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

The present invention relates to beverage capsules, more especially to beverage capsules in which the beverage base is enclosed in a thin walled solid envelope made of chocolate or a fat-based confectionery coating.

There is a desire for beverage capsules, which are to be mixed with hot milk or water for consumption, which contain real chocolate.

Beverage mixes are known in which chocolate powder is mixed with a beverage powder such as cocoa, but these products suffer from the disadvantages that the presence of chocolate is not self-evident before dissolution.

French Patent No. 1442282 describes a food product comprising beverage powders surrounded by an envelope of sugar, which enables the taking of two different products in a single operation and their instantaneous dissolution together.

French Patent No. 1265224 describes a solid product consisting of a core of refined sugar surrounded by an envelope of a cocoa nib paste.

We have found that the use of chocolate as the envelope provides a means of introducing a large quantity of "real chocolate" with enhanced melting characteristics into hot milk or water by virtue of having its surface area maximised as a thin shelled coating.

Moreover, if the beverage base is used in a water-based liquid or syrup form, a chocolate envelope or any envelope of confectionery material having a continuous phase of fat serves as a water barrier and as a means of delivering a complete single serving dose of syrup. In contrast, if a sugar envelope were used to hold a liquid it would be necessary for the water phase of the liquid to be saturated with sugar to maintain the integrity of the sugar shell and prevent the liquid from redissolving the sugar shell; this requirement is not necessary when using a fat-based envelope such as chocolate since it resists moisture transfer. Finally, such a product comprising a beverage base surrounded by a chocolate shell may also be consumed out-of-hand.

Accordingly, the present invention provides a beverage capsule in which a beverage base consisting of cocoa, hot cocoa mix, coffee, chocolate syrup or various substitutes or any mixture thereof is enclosed in a solid envelope made of chocolate or a fat-based confectionery coating having a thickness of from 0.5 to 5 mm.

The beverage base may be in liquid, syrup, semi-solid or solid form. The liquid or syrup may be conventional and may be water-based e.g. containing from 17 to 27% water or it may be fat-based. The solid may be a powder, compressed cake of powder or a dried out sponge.

The solid envelope may be made of any kind of coating with fat as the continuous phase, for example, white, milk or dark chocolate or compound coatings containing vegetable fats or various substitutes such as direct cocoa butter replacements, stearines, coconut oil, palm oil, butter or any mixture thereof. The solid envelope may be made by any conventional technique, for example, by a moulding process. If a solid centre is used the solid envelope may be enrobable or panned. The thickness of the envelope is preferably from 0.7 mm to 4.0 mm and especially from 2.0 mm to 3.0 mm. The shape of the chocolate envelope may vary and may for instance, be tubular, disc-shaped or spherical depending on the application.

If desired, various flavours may be added either to the beverage base or to the solid envelope. Since the product may have both an oil and a water component any flavour that is dispersible in either of these can be added.

The amount of beverage base and the size of the chocolate envelope may vary widely according to the requirements. For instance, the amount of beverage base may be from 1 to 50 g, preferably from 1.5 to 40 g and especially from 2 to 35 g while the weight of the chocolate envelope may be from 3 g to 50 g, preferably from 3.5 g to 40 g and especially from 4 g to 30 g.

The beverage capsule of the present invention may be prepared for consumption by mixing with a hot liquid. Although the temperature of the hot liquid may be as low as 40°C, it is preferable that the temperature is at least 75°C. Any consumable liquid that can be safely heated to at least 75°C can be used as the liquid medium, for example, coffee or tea, but milk or water are most appropriate. A preferred method of preparing the beverage capsule for consumption is by adding one or more beverage capsules to cold liquid and then putting in a microwave oven at full power for about 1.5 minutes.

The beverage capsule according to this invention provides a unique means of showing that a beverage product contains real chocolate.

The following Example further illustrate the present invention.

Example 1

A water-based chocolate syrup was prepared having the following constitution:

| Ingredients | % |
|---|---|
| High Fructose Corn Syrup (42% Fructose) | 36.22 |
| Water | 17.31 |
| Sucrose | 35.10 |
| Alkalized cocoa | 10.73 |
| Xantham Gum | 0.20 |
| Salt | 0.21 |
| Citric acid | 0.22 |
| Potassium sorbate | 0.11 |
| | 100.00 |

The syrup was prepared as follows:

1. A premix was made out of salt, citric acid and potassium sorbate.
2. 10% of the sucrose and xanthan gum were mixed and added to the water with agitation.
3. The high fructose corn syrup was added to the aqueous mixture and mixed.
4. The cocoa was added to the aqueous mixture and stirred until fully dispersed.
5. The remaining ingredients, sugar and premix were added to the mixture.
6. After all the ingredients had been blended, the mixture was pasteurised at 86°C for 40 s.
7. The water lost during heating was measured and replaced with fresh water.
8. The syrup formed was then homogenised, cooled and stored in appropriate containers until used.

Tempered dark chocolate was poured into a candy mould which was then inverted and cooled to produce a thin chocolate shell. When sufficiently hardened, 7.4 g of the water based chocolate syrup prepared as above was poured into the mould and then the mould was capped with chocolate to complete the shell container and form the capsule. The final weight of chocolate added was 4.2 g.

On adding two of these capsules to 120 g of hot milk the capsules rapidly dispersed to give a tasty drink. The product also tasted good eaten out of the hand.

Example 2

A similar procedure to that described in Example 1 was carried out but using 10 g of a milk chocolate to form the chocolate envelope and 16 g of a cherry flavoured chocolate syrup for the center.

On adding one of these capsules to 150 g of hot milk, the beverage capsule rapidly dispersed to give a tasty drink.

Example 3

A mint flavoured product was prepared by following a similar procedure to that described in Example 1 but using 4.3 g of a chocolate-mint flavoured coating to form the envelope and 7.4 g of a chocolate syrup for the center.

On adding two of these capsules to 120 g of hot milk, the capsules rapidly dispersed to give a tasty chocolate-mint flavoured drink. The product also tasted good upon eating out of hand.

Example 4

Tempered milk chocolate was poured into a candy mould which was then inverted to produce a thin layer of chocolate weighing 20 g in the mould during room temperature cooling. When sufficiently hardened 35 g of hot cocoa mix powder was filled into the mould and then the mould was capped with chocolate to complete the shell container.

On adding to 170 g of hot water the beverage capsule rapidly dispersed to give a tasty drink.

Example 5

A similar procedure to that described in Example 4 was carried out but using 21 g of a dark chocolate to form the chocolate envelope and 23 g of cherry flavoured hot cocoa mix powder for the centre.

On adding to 200 g of hot milk, the beverage capsule rapidly dispersed to give a tasty drink.

Example 6

A Mocha flavoured product was prepared by following a similar procedure to that described in Example 4 but using 9 g of a dark chocolate to form the chocolate envelope and 2 g of instant coffee for the centre.

On adding to 170 g of hot water, the beverage capsule rapidly dispersed to give a tasty Mocha flavoured drink.

**Claims**

1. A beverage capsule in which a beverage base consisting of cocoa, hot cocoa mix, coffee, chocolate syrup or various substitutes or any mixture thereof is enclosed in a solid envelope made of chocolate or a fat-based confectionery coating having a thickness of from 0.5 to 5 mm.

2. A beverage capsule according to claim 1 wherein the beverage base is in liquid or syrup form.

3. A beverage capsule according to claim 1 wherein the solid envelope is made of a fat-based confectionery coating with fat as the continuous phase.

4. A beverage capsule according to claim 1 wherein the solid envelope is made of white chocolate, milk chocolate or dark chocolate or compound coatings containing vegetable fats or various substitutes.

5. A beverage capsule according to claim 1 wherein a flavour is added to the beverage base or to the solid envelope.

6. A beverage capsule according to claim 1 wherein the amount of the beverage base is from 1.5 to 40 g.

7. A beverage capsule according to claim 1 wherein the amount of chocolate envelope is from 3.5 to 40 g.

8. A process for preparing a beverage capsule which comprises enclosing a beverage base consisting of cocoa, hot cocoa mix, coffee, chocolate syrup or various substitutes or any mixture thereof in a solid envelope made of chocolate or a fat-based confectionery coating having a thickness of from 0.5 to 5 mm.

**Revendications**

1. Capsule pour boisson dans laquelle une base pour boisson, constituée de cacao, de mélange de cacao chaud, de café, de sirop de chocolat ou de divers produits de remplacement ou d'un mélange quelconque de ceux-ci, est enfermée dans une enveloppe solide formée de chocolat ou d'un revêtement de confiserie à base de matière grasse, ayant une épaisseur de 0,5 à 5 mm.

2. Capsule pour boisson selon la revendication 1, dans laquelle la base pour boisson est sous forme de liquide ou de sirop.

3. Capsule pour boisson selon la revendication 1, dans laquelle l'enveloppe solide est formée d'un revêtement de confiserie à base de matière grasse, la phase continue étant constituée de matière grasse.

4. Capsule pour boisson selon la revendication 1, dans laquelle l'enveloppe solide est formée de chocolat blanc, de chocolat au lait ou de chocolat noir ou de revêtements composés contenant des matières grasses végétales ou divers produits de remplacement.

5. Capsule pour boisson selon la revendication 1, dans laquelle un arôme est ajouté à la base pour boisson ou à l'enveloppe solide.

6. Capsule pour boisson selon la revendication 1, dans laquelle la quantité de la base pour boisson est de 1,5 à 40 g.

7. Capsule pour boisson selon la revendication 1, dans laquelle la quantité d'enveloppe en chocolat est de 3,5 à 40 g.

8. Procédé de préparation d'une capsule pour boisson qui consiste à enfermer une base pour boisson, constituée de cacao, d'un mélange de cacao chaud, de café, de sirop de chocolat ou de divers produits de remplacement ou d'un mélange quelconque de ceux-ci, dans une enveloppe solide formée de chocolat ou d'un revêtement de confiserie à base de matière grasse, ayant une épaissseur de 0,5 à 5 mm.

**Patentansprüche**

1. Getränk in Kapselform, wobei eine Getränkebasis, welche aus Kakao, einem Gemisch für einen warmen Kakao, Kaffee, Schokoladesirup, oder aus verschiedenen Ersatzmaterialien, oder aus einem beliebigen Gemisch hievon besteht, in einer festen Hülle eingeschlossen ist, welche aus Schokolade oder aus einem Süßwarenüberzug auf Fettbasis angefertigt ist, und welche eine Dicke von 0,5 bis 5 mm aufweist.

2. Getränk in Kapselform nach Anspruch 1, wobei die Getränkebasis in flüssiger Form oder in der Form eines Sirups vorliegt.

3. Getränk in Kapselform nach Anspruch 1, wobei die feste Hülle aus einem Süßwarenüberzug auf Fettbasis, mit Fett als der kontinuierlichen Phase, angefertigt ist.

4. Getränk in Kapselform nach Anspruch 1, wobei die feste Hülle aus weißer Schokolade, Milchschokolade oder dunkler Schokolade, oder aus vermischten Überzügen, welche pflanzliche Fette oder verschiedene Ersatzmaterialien enthalten, angefertigt ist.

5. Getränk in Kapselform nach Anspruch 1, wobei zu der Getränkebasis oder zu der festen Hülle ein Geschmacksstoff zugesetzt worden ist.

6. Getränk in Kapselform nach Anspruch 1, wobei die Menge der Getränkebasis 1,5 bis 40 g beträgt.

7. Getränk in Kapselform nach Anspruch 1, wobei die Menge der Schokoladehülle 3,5 bis 40 g beträgt.

8. Verfahren zur Herstellung eines Getränkes in Kapselform, welches das Einschließen einer Getränkebasis, welche aus Kakao, einem Gemisch für einen warmen Kakao, Kaffee, Schokoladesirup, oder aus verschiedenen Ersatzmaterialien, oder aus einem beliebigen Gemisch hievon besteht, in einer festen Hülle, welche aus Schokolade oder aus einem Süßwarenüberzug auf Fettbasis angefertigt ist, und welche eine Dicke von 0,5 bis 5 mm aufweist, umfaßt.